# EUROPEAN PATENT APPLICATION

(11) **EP 1 990 222 A2**
(43) Date of publication of application: **12.11.2008**
(21) Application number: 08155787.8
(22) Date of filing: 07.05.2008
(51) Int. Cl.: B60H 1/32

(54) **Transport refrigeration apparatus**

(30) Priority: 11.05.2007 JP 2007126472
(71) Applicant: MITSUBISHI HEAVY INDUSTRIES, LTD., Tokyo 108-8215 (JP)
(72) Inventor: Mizuma, Ikuo, Kiyosu, Aichi-ken 452-8561 (JP)
(74) Representative: Besnard, Christophe Laurent

(57) **Abstract**

Provided is a sub-engine-type transport refrigeration apparatus capable of realizing improvement in a fuel consumption and durability of the sub-engine, suppression of generation of black smoke at the time of start, and extension of the periodic maintenance interval. The sub-engine-type transport refrigeration apparatus includes: a generator-motor (5) that can generate electricity when a sub-engine (2) is in operation, and that can be operated as a motor when the sub-engine is stopped; a battery (14) that stores electricity which the generator motor (5) generates, and serves as an electricity source when the generator-motor is operated as a motor; an electricity conversion device (13) that converts the electricity generated by the generator-motor (5) into DC electricity and feeds the DC electricity to the battery (14) when the generator-motor is driven as a generator, and converts battery electricity into AC electricity and feeds the AC electricity to the generator-motor (5) when the generator-motor is operated as a motor; and an open-type compressor (9) that is driven by the sub-engine (2) when the sub-engine (2) is in operation, and is driven by the generator-motor (5) which is operated as a motor with electricity from the battery (14) when the sub-engine is stopped.

## Description

### 1. FIELD OF THE INVENTION

The present invention relates to a so-called sub-engine-type transport refrigeration apparatus which is used when mounted in a refrigeration vehicle, and includes a dedicated engine which drives an open-type compressor.

### 2. DESCRIPTION OF RELATED ART

Transport refrigeration apparatuses mounted in refrigeration vehicles may be broadly categorized into direct coupling-type transport refrigeration apparatuses where the vehicle driving engine drives a compressor (open-type compressor) which is included in the refrigeration apparatus, and sub-engine-type transport refrigeration apparatuses where the compressor is driven by a dedicated engine (sub-engine). Since either of these transport refrigeration apparatuses may sometimes have to be operated with the engine stopped, the transport refrigeration apparatus is usually driven with electricity fed from a battery or an external main power supply, and is provided with a motor that drives an open-type compressor (refer to, for example, JP-A-11-108493 and JP-A-2006-290116 (which shall be called Reference 1 and Reference 2 respectively)).

In the above transport refrigeration apparatuses, the direct coupling-type transport refrigeration apparatus has the feature that since a sub-engine is unnecessary, the configuration is so simple that the direct coupling-type transport refrigeration apparatus can be lightweight and inexpensive. However, the direct coupling-type transport refrigeration apparatus is confronted with the problems that: since the refrigerating ability constantly varies according to any change in the rotation speed of the vehicle driving engine, the refrigerating ability tends to be unstable and the cooling temperature in the cooling chamber is not stabilized; and when the engine is idle, the rotation speed decreases and the cooling capability becomes insufficient. On the other hand, the sub-engine-type transport refrigeration apparatus can exhibit a stable refrigerating ability because it has a dedicated engine, and can stabilize the cooling temperature in the cooling chamber. However, the sub-engine-type transport refrigeration apparatus is confronted with the problems that: since a second sub-engine is mounted, the weight is large and the cost is high; and periodic maintenance of the sub-engine is necessary. Therefore, a choice is made between the direct coupling-type transport refrigeration apparatus and sub-engine-type transport refrigeration apparatus according to conditions of use, in order to make the most of their respective characteristics.

Reference 2 proposes a direct coupling-type transport refrigeration apparatus that has a motor-generator connected to a vehicle driving engine via a clutch and has an inverter/converter and a battery connected to the motor-generator. According to the transport refrigeration apparatus having this configuration, while the vehicle is running, the vehicle driving engine is used to drive an open-type compressor and also drive the motor-generator for electric generation. Thus, the battery can be charged. Moreover, at a standby time during which the vehicle is stopped, an external power supply is used to drive the motor, and the motor is used to drive the open-type compressor and also drive the motor-generator for electric generation. Thus, the battery can be charged. Further, during an idling stop or the like, the motor-generator can be driven with the battery as a power supply in order to drive the open-type compressor. Consequently, even when the vehicle driving engine is stopped, the compressor can continue to be driven and the battery can be kept sufficiently charged, so that the operation of the refrigeration apparatus can be continued without the necessity of using the battery for many purposes.

Moreover, in JP-A-2000-283622 (hereinafter Reference 3), a proposal is made of an electric generation-type transport refrigeration apparatus in which: a generator is driven with a vehicle driving engine, and at the same time that the generated electricity is used to drive a closed-type electric compressor having a built-in motor, via an inverter (electricity conversion device), the generated electricity is used to charge the battery; and when the vehicle driving engine is stopped (for unloading or the like), the battery is used to drive the closed-type electric compressor via the inverter.

The transport refrigeration apparatuses described in References 2 and 3 have a battery mounted so that even when the vehicle driving engine is stopped due to the stop or idling of the vehicle, the operation of the refrigeration apparatus can be continued. While the vehicle is running, the battery is charged through electric generation by the generator. When the vehicle driving engine is stopped, the compressor is driven using the motor, which is driven with the battery as a power supply, so that the refrigeration apparatus can be continuously operated. However, this does not address or supply a solution to the inherent problem underlying the sub-engine-type transport refrigeration apparatus described in Reference 1. In particular, what is described in Reference 3 is a completely different type of transport refrigeration apparatus by reason that the closed compressor is adopted as a compressor. Moreover, in this configuration lies the problem that a drop in efficiency corresponding to the power lost in the generation of electricity and running of the motor by this electricity is unavoidable.

On the other hand, the sub-engine-type transport refrigeration apparatus like the one described in Reference 1 can be continuously operated irrespective of whether the vehicle driving engine is running or stopped, because of the inclusion of the dedicated engine. However, the sub-engine is normally started or stopped along with the drive/stop of the refrigeration apparatus, that is, the open-type compressor. At the time of a low load, therefore, the start/stop frequency of the sub-engine gets higher. Consequently, fuel consumption is degraded, fuel consumption is increased, life of the engine is shortened, and black smoke is generated at the time of start. Moreover, frequent engine maintenance is required. These problems are left unsolved.

### BRIEF SUMMARY OF THE INVENTION

The present invention was developed in light of the foregoing situation. An object of the present invention is to provide a transport refrigeration apparatus that can overcome the problems inherent to the sub-engine-type transport refrigeration apparatus, improve the fuel consumption and durability of the sub-engine, suppress generation of black smoke at the time of start, and extend the periodic maintenance interval.

A transport refrigeration apparatus in accordance with the present invention is a sub-engine-type transport refrigeration apparatus including an open-type compressor that is driven with power fed from an external driving source and a dedicated sub-engine that drives the open-type compressor. The transport refrigeration apparatus includes: a generator-motor that can generate electricity while being driven by the sub-engine when the sub-engine is in operation, and that when the sub-engine is stopped, can drive as a motor when fed with electricity; a battery that when the generator-motor generates electricity, stores generated electricity, and that when the generator-motor drives as a motor, serves as an electricity feed source; a electricity conversion device that is connected to both the generator-motor and the battery, so that when the generator-motor is driven as a generator, the device converts generated AC electricity into DC electricity and feeds the DC electricity to the battery, and when the generator-motor operates as a motor, the device converts DC electricity fed from the battery into AC electricity and feeds the AC electricity; and an open-type compressor that is connected to the generator-motor via a power connection/disconnection means so that when the sub-engine is in operation, the compressor is driven with power obtained from the sub-engine, and when the sub-engine is stopped, the compressor is driven with rotating power obtained from the generator-motor operating as a motor with electricity from the battery.

The sub-engine-type transport refrigeration apparatus exhibits a stable refrigerating ability and can stabilize the cooling temperature in a cooling chamber. However, over a low load domain, the start/stop frequency of a sub-engine rises, and the problems inherent to the sub-engine-type transport refrigeration apparatus, that is, high fuel consumption, short engine life, generation of black smoke at the time of start, and frequent engine maintenance occur.

According to the present invention, since the generator-motor that is connected to the sub-engine via the power connection/disconnection means, the electricity conversion device and battery that are connected to the generator-motor, and the open-type compressor that is connected to the generator-motor via the power connection/disconnection means are included, when the sub-engine is in operation, the open-type compressor is driven with power obtained from the sub-engine, and the generator-motor functions as a generator. Generated electricity is converted into DC electricity by the electricity conversion device, and stored in the battery. Moreover, when the sub-engine is stopped, the open-type compressor can be driven with power obtained from the generator-motor that operates with electricity from the battery. Moreover, since the power connection/disconnection means is interposed between the sub-engine and generator-motor and between the generator-motor and open-type compressor, the generator-motor can be driven by the sub-engine in order to generate electricity irrespective of whether the open-type compressor is operating or is stopped. Moreover, the open-type compressor can be driven by the sub-engine irrespective of whether or not electricity is being generated by the generator-motor. Consequently, while the sub-engine is operated highly efficiently according to the load upon the refrigeration function, the charge held by the battery, or the manner of use of the refrigeration apparatus, the start/stop frequency thereof can be decreased. Consequently, the aforesaid problems inherent to the sub-engine-type transport refrigeration apparatus can be overcome, and improvement in the sub-engine's fuel consumption and durability, reduction of black smoke at the time of start, and extension of the periodic maintenance interval can be realized. Moreover, at the time of starting the sub-engine, assisted start by the generator-cum-motor can be performed. Further improvement in the fuel consumption and in the startability of the sub-engine, and extension of the service life of a starter motor can be achieved. Further, the existing sub-engine-type transport refrigeration apparatus can be easily upgraded to the transport refrigeration apparatus of the present invention by adding the battery and electricity conversion device.

The transport refrigeration apparatus of the present invention may be constructed so that: when the open-type compressor is stopped due to a decrease in the refrigeration load, the sub-engine is continuously operated until the magnitude of charge of the battery reaches a set value; and after the battery is charged up to the set value, the sub-engine is stopped and the open-type compressor is driven by the generator-motor operating as a motor with electricity fed from the battery until the amount of electricity discharged reaches a set value.

According to the above construction, even after the open-type compressor is stopped because the refrigeration load is decreased, the battery can be charged because the sub-engine continues to be operated. When the charge of the battery is completed, the sub-engine is stopped. Thereafter, the sub-engine is left stopped and the open-type compressor is driven by the generator-motor that is operated as a motor with electricity fed from the battery until the amount of electricity discharged by the battery reaches a set value. Consequently, the start/stop frequency of the sub-engine can be decreased to the greatest possible extent, and the problems inherent to the sub-engine-type transport refrigeration apparatus can be overcome.

The transport refrigeration apparatus of the present invention may be constructed so that: taking advantage of the characteristic of the sub-engine that it becomes highly efficient when under close to the maximum load, over a set load domain in which the load is large, the electric generation by the generator-motor is suspended and the open-type compressor is driven by the sub-engine; over a set load domain in which the load is small, the open-type compressor is driven by the sub-engine, and at the same time, the battery is charged with electricity generated by the generator-motor; and after the battery is charged up to the set value, the sub-engine is left stopped and the open-type compressor is driven by the generator-motor that is operated as a motor with electricity fed from the battery until the amount of electricity discharged reaches a set value.

According to this construction, over a refrigeration load domain in which the refrigeration load is large, electric generation by the generator-motor is suspended and the open-type compressor is driven by the sub-engine. Consequently, the sub-engine can be operated in its high load domain. Over a domain of refrigeration loads in which the load is small, the sub-engine can be operated with a high load by driving the open-type compressor with the sub-engine and at the same time charging the battery through electric generation by the generator-motor. After the charge of the battery is completed, the sub-engine is left stopped until the magnitude of discharge of the battery reaches the set value. The open-type compressor can be driven by the generator-motor that is operated as a motor with electricity fed from the battery. Consequently, the sub-engine can be very efficiently operated in the high overall load domain, the start/stop frequency of the sub-engine can be decreased to the greatest possible extent, and the aforesaid problems inherent to the sub-engine-type transport refrigeration apparatus can be overcome.

The transport refrigeration apparatus of the present invention may be constructed so that: the refrigeration load is calculated from the ambient temperature and the cooling chamber interior temperature; and the generator-motor is driven as an electric generator to the extent that the sub-engine does not exceed its maximum output.

According to this construction, the refrigeration load is calculated, and the generator-motor is driven as an electric generator to the extent that the output of the sub-engine that is driving the open-type compressor will not exceed its maximum output. Consequently, the sub-engine can be very efficiently and stably operated with a high load. As a result, its fuel consumption can be greatly improved.

According to the transport refrigeration apparatus of the present invention, the sub-engine is very efficiently operated and the start/stop frequency of the sub-engine can be decreased through suitable response to the refrigeration load, the charge of the battery, and the use situation of the refrigeration apparatus. Consequently, the aforesaid problems inherent to the sub-engine-type transport refrigeration apparatus can be overcome, and improvement the sub-engine's fuel consumption and durability, suppression of generation of black smoke at the time of its start, and extension of its periodic maintenance interval can be realized. Moreover, when the sub-engine is started, assisted start by the generator-motor can be performed. Further improvement in the fuel consumption and the startability of the engine and extension of the service life of a starter motor can be achieved. Further, an existing sub-engine-type transport refrigeration apparatus can be relatively easily upgraded to the transport refrigeration apparatus of the present invention by addition of a battery and electricity conversion device.

### BRIEF DESCRIPTION OF THE SEVERAL VIEWS OF THE DRAWINGS

Fig. 1 is a schematic configuration diagram of a transport refrigeration apparatus in accordance with the first embodiment of the present invention;
Fig. 2 is a time chart for explaining operation of the transport refrigeration apparatus in accordance with the first embodiment of the present invention;
Fig. 3 is a diagram showing characteristics of a sub-engine in a transport refrigeration apparatus in accordance with the second embodiment of the present invention;
Fig. 4 is an explanatory diagram of operational domains of the sub-engine shown in Fig. 2;
Fig. 5 is a relational explanatory diagram between the operational domains of the sub-engine shown in Fig. 2 and a refrigeration load;
Fig. 6A and Fig. 6B are flowcharts explaining control operation of the transport refrigeration apparatus in accordance with the second embodiment of the present invention;
Fig. 7 is a time chart for explaining operations of the transport refrigeration apparatus at a high load time in accordance with the second embodiment of the present invention; and
Fig. 8 is a time chart for explaining operations of the transport refrigeration apparatus at a low load time in accordance with the second embodiment of the present invention.

### DETAILED DESCRIPTION OF THE INVENTION

Referring to the drawings, embodiments of the present invention will be described below.

### First Embodiment

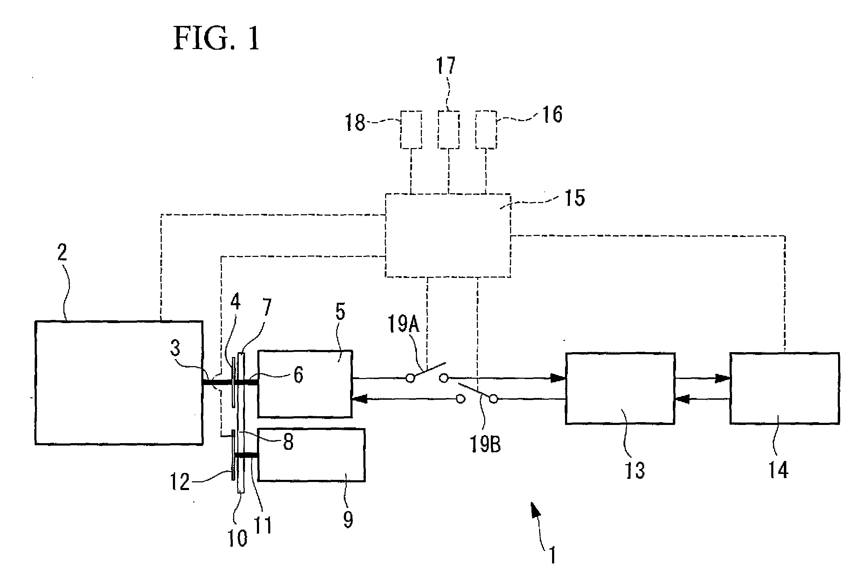

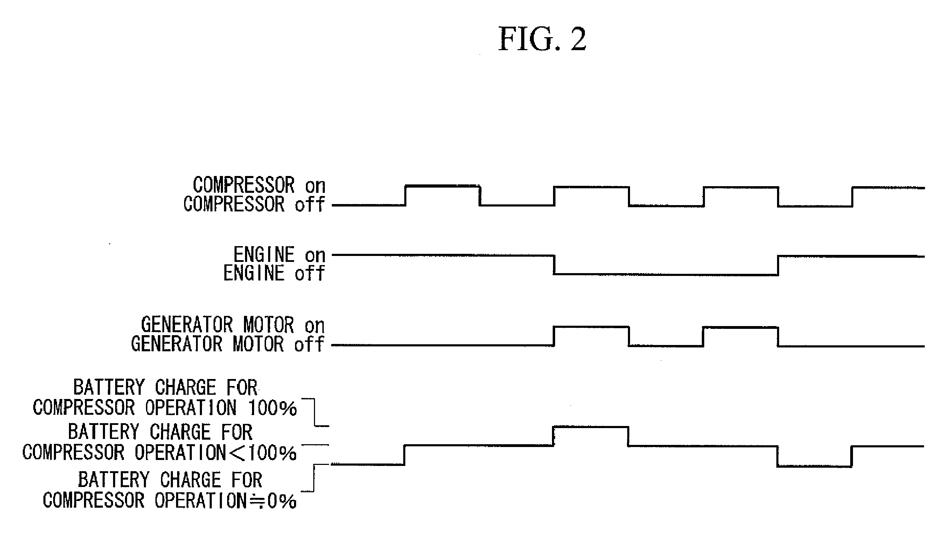

The first embodiment of the present invention will be described below in conjunction with Fig. 1 and Fig. 2.

Fig. 1 is a schematic configuration diagram of a sub-engine-type transport refrigeration apparatus 1 in accordance with the present embodiment. The sub-engine-type transport refrigeration apparatus 1 includes a dedicated engine (sub-engine) 2 for driving a compressor. As the sub-engine 2, a diesel engine of about 1000 cc is adopted. Moreover, a generator-motor 5 is connected to the output shaft 3 of the sub-engine 2 via a centrifugal clutch or an electromagnetic clutch (in the present embodiment, a centrifugal clutch) 4 that is a power connection/disconnection means.

The generator-motor 5 is a motor generator that functions as a generator when rotated with a rotational driving force externally given, and that functions as a motor when externally fed with electricity. The generator-motor 5 includes a receptacle that is not shown, and has the capability for being operated as a motor by connecting the receptacle to an external commercial electric power supply. A pulley 7 is attached to the rotation shaft 6 of the generator-motor 5, and is connected via a belt 8 to a pulley 10 which is close to an open-type compressor 9. An electromagnetic clutch 12 that is a power connection/disconnection means is interposed between the pulley 10 and the drive shaft 11 of the open-type compressor 9, whereby power transmission to the open-type compressor 9 can be disconnected.

The open-type compressor 9 is of a type in which one end of the drive shaft 11 juts out from a housing to the outside and is driven with power fed from an external driving source. Any of various types of compressors including a reciprocal type, a rotary type, and a scroll type can be adopted. The open-type compressor 9 is driven with power fed from the sub-engine 2 or the generator-motor 5, and compresses a refrigerant. The open-type compressor 9 together with a condenser, an expansion valve, and an evaporator in a cooling chamber which are not shown make up a known refrigeration cycle which cools the interior of the cooling chamber.

An electricity conversion device (inverter/converter) 13 that converts AC electricity which is generated by the generator-motor 5 into DC electricity and feeds the DC electricity to the battery 14, or converts DC electricity fed from the battery 14 into AC electricity and feeds the AC electricity to the generator-motor 5, is connected to the generator-motor 5. Moreover, the battery 14 that stores electricity generated by the generator-motor 5 via the electricity conversion device 13, and that feeds the electricity to the generator-motor 5 when the stored electricity is required so that the generator-cum-motor 5 will operate as a motor, is connected to the generator-motor 5.

Moreover, the transport refrigeration apparatus 1 includes a control device 15. Information including temperature detected by an chamber interior temperature sensor 16 that detects the temperature inside the cooling chamber, a set temperature value sent from a temperature setter 17 for use in designating the chamber interior temperature, temperature detected by an ambient temperature sensor 18 that detects the ambient temperature, and amounts of charge/discharge by the battery is inputted to the control device 15. Based on this inputted information, the control device 15 controls the operation/stop of the sub-engine 2, the function switching of the generator-motor 5 between being a generator and being a motor, and the drive/stop of the open-type compressor 9, as described later. In the present embodiment, the function switching of the generator-motor 5 shall be, for convenience' sake, achieved by switching of two switches 19A and 19B.

Owing to the aforesaid configuration, according to the present embodiment, the operational effect described below is exerted.

With the initiation of cooling operation, the sub-engine 2 is started. When a certain rotation speed is attained, the centrifugal clutch 4 is brought to a connected state. Power is transmitted from the output shaft 3 of the sub-engine 2 to the rotation shaft 6 of the generator-motor 5, whereby the generator-motor 5 is rotated. Moreover, along with the rotation of the rotation shaft 6, the power is transmitted to the pulley 10 via the pulley 7 and belt 8. Further, when the electromagnetic clutch 12 is turned on, the power is transmitted to the drive shaft 11 of the open-type compressor 9. The open-type compressor 9 is then driven. When the open-type compressor 9 is driven, the refrigerant is compressed and circulated around the refrigeration cycle that is not shown. Consequently, the interior of the cooling chamber is cooled. Thus, the cooling operation by operating the sub-engine 2 is achieved.

Under the circumstances where cooling operation cannot be performed by operating the sub-engine 2 (for example, operation in a ferry or a residential district in which an exhaust or noise is a problem), the sub-engine 2 is stopped, and the receptacle (not shown) is connected to the external power supply in order to feed electricity from the external power supply to the generator-motor 5. The generator-motor 5 is thus driven as a motor, and the open-type compressor 9 is driven by the generator-cum-motor 5. Consequently, even under the above circumstances, the transport refrigeration apparatus 1 can be operated to cool the interior of the cooling chamber.

On the other hand, during normal vehicle running, the sub-engine 2 is operated for cooling operation. However, when the temperature detected by the chamber interior temperature sensor 16 reaches down to the set temperature designated with the temperature setter 17, the control device 15 turns off the electromagnetic clutch 12 and thus stops the open-type compressor 9. As shown in the time chart of Fig. 2, by engaging and releasing the electromagnetic clutch 12, the open-type compressor 9 is turned on and off so that the chamber interior temperature will reach the set temperature. At this time, the operation depends on the size of charge of the battery 14, that is, if the size of charge is less than the set value (full charge), even when the open-type compressor 9 is turned off, the operation of the sub-engine 2 is continued. The switch 19A is turned on in order to perform electric generation by the generator-motor 5 so as to charge the battery 14. Consequently, the stop of the sub-engine 2 can be delayed.

When the charging of the battery 14 is completed as mentioned above, the sub-engine 2 is stopped. Thereafter, electricity is fed from the battery 14 to the generator-motor 5 until the amount of electricity discharged by the battery 14 reaches the set value. Thus, the generator-motor 5 is driven as a motor at times depending on the on/off state of the open-type compressor 9. Consequently, as shown in Fig. 2, the open-type compressor 9 can be driven by the generator-motor 5 using the battery 14 as a power supply with the sub-engine 2 left stopped. When the amount of electricity discharged by the battery 14 reaches the set value, the source driving the open-type compressor 9 is switched to be the sub-engine 2, and the battery 14 is charged at the same time.

As mentioned above, the generator-motor 5 can be driven to perform electric generation by the sub-engine 2 irrespective of the on/off state of the open-type compressor 9. Moreover, the open-type compressor 9 can be driven by the sub-engine 2 irrespective of whether electricity is being generated by the generator-motor 5. Consequently, while the sub-engine 2 is very efficiently operated and the start/stop frequency thereof can be decreased to the greatest possible degree by making suitable changes in response to the refrigeration load, the amount of charge in the battery 14, and the usage conditions of the refrigeration apparatus 1. Consequently, the items needing improvement in the sub-engine-type transport refrigeration apparatus 1 such as fuel consumption, durability, suppression of black smoke at the time of start, and extension of the periodic maintenance interval can be overcome.

Moreover, at the time of starting the sub-engine 2, assisted start by the generator-motor 5 can be performed. Further improvement in fuel consumption, the startability of the sub-engine 2, and the service life of the starter motor can be achieved. Moreover, during operation by the sub-engine 2, degradation in efficiency equivalent to the power lost in the generation of electricity and running of the motor by this electricity can be avoided. Further, merely by adding the battery 14 and electricity conversion device 13 to an existing sub-engine-type transport refrigeration apparatus, the sub-engine-type transport refrigeration apparatus can be upgraded to the transport refrigeration apparatus 1 of the present embodiment.

### Second Embodiment

Next, the second embodiment of the present invention will be described in conjunction with Fig. 1 and Fig. 3 to Fig. 8.

The present embodiment is different from the aforesaid first embodiment in that the battery is charged in a way depending on the characteristics of the sub-engine 2 and the refrigeration load. Since the other points of this embodiment are identical to the first embodiment, description of those points will be omitted.

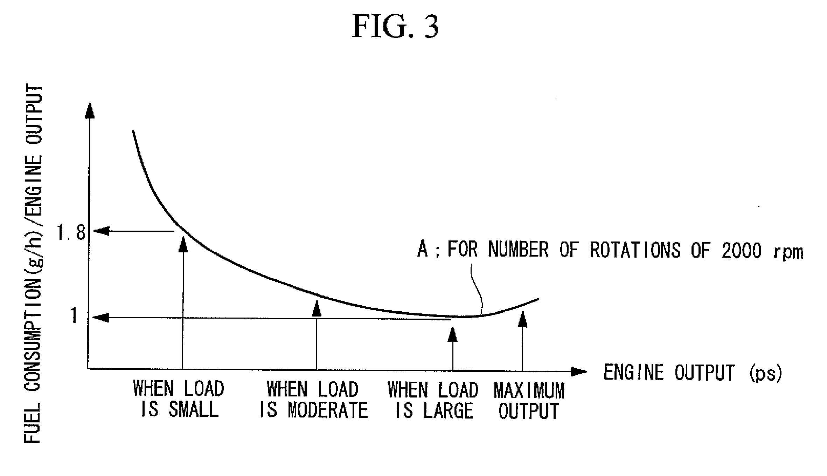

Fig. 3 shows the engine characteristics of the sub-engine 2. The engine characteristics considered are typical ones. The abscissa indicates engine output and the ordinate indicates fuel consumption/engine output (fuel efficiency). In the drawing, curve A shows performance in the case where an engine speed is 2000 rpm. Normally, the rotation speed of an engine is determined based on the maximum load which has been decided. The engine is designed so that it has maximum efficiency under the maximum load.

However, since normal operation is usually performed under a load smaller than the maximum load, the engine is often operated with low efficiency. It is clear in Fig. 3 that as the load gets smaller, the fuel efficiency decreases. Thus, in a case where the load is small, at the same time that the open-type compressor 9 is operated, the generator-motor 5 is driven as a generator to generate electricity. In this way, the load of the sub-engine 2 can be raised in order to improve the engine efficiency. For example, when the load of the open-type compressor 9 is small and fuel consumption/engine output is 180 % of that attained at maximum efficiency, if fuel consumption/engine output is upgraded to be 120 % of that at the maximum efficiency by driving the generator-motor 5, assuming that the efficiency of the generator-motor 5 is 80 %, fuel consumption/engine output is 120/0.8=150 %. Thus, fuel consumption/engine output is improved from 180 % to 150 %.

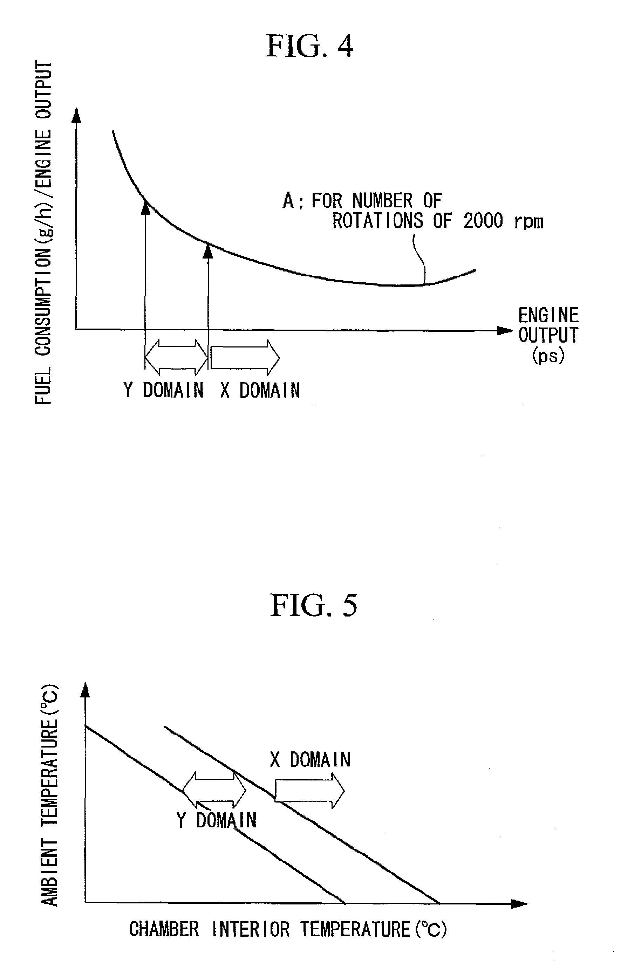

The refrigeration load can be calculated from the temperatures detected by the chamber interior temperature sensor 16 and ambient temperature sensor 18 (see Fig. 1). Herein, as shown in Fig. 4, when the output of the sub-engine 2 is at the maximum, if the generator-motor 5 is driven as a generator with the open-type compressor 9 also driven, where the load domain exceeding the maximum output of the sub-engine 2 is the X domain and a load domain over which when consideration is taken of the electric generation efficiency of the generator-motor 5, the efficiency is higher when electric generation not performed is higher is the Y domain, the X domain, the Y domain, and the refrigeration load calculated from the chamber interior temperature and ambient temperature have the relationship shown in Fig. 5. Therefore, the refrigeration load is calculated as mentioned above, and electric generation is performed by driving the generator-motor 5 as a generator under the condition that the maximum output of the sub-engine 2 should not be exceeded.

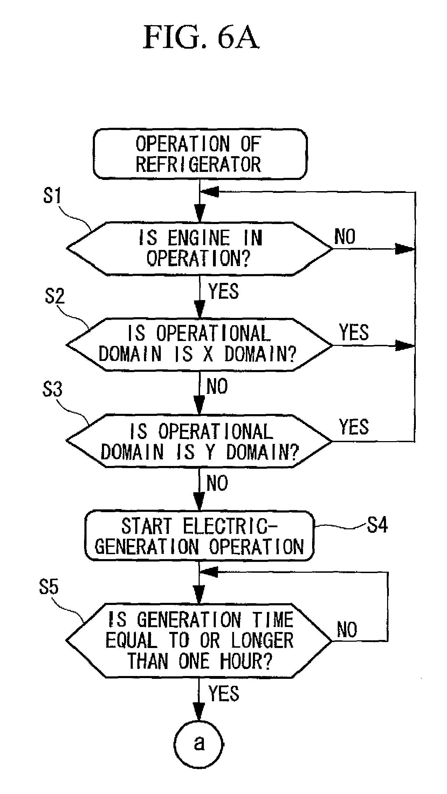

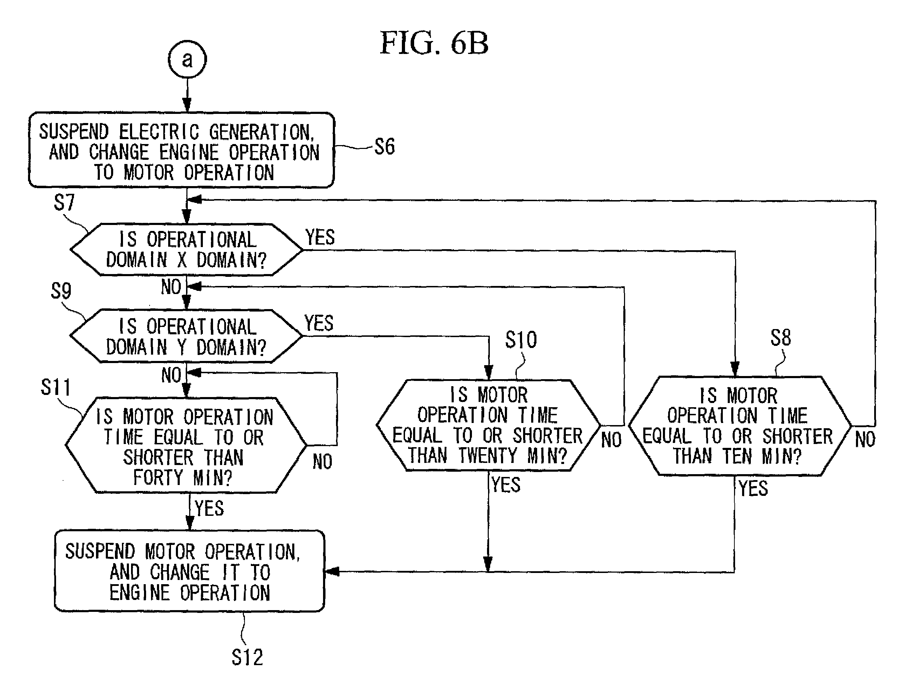

The operation of the aforesaid transport refrigeration apparatus 1 will next be described, in conjunction with the flowcharts and time charts of Fig. 6A to Fig. 8.

When the operation of the refrigeration apparatus 1 is started, whether the sub-engine 2 is in operation is decided at step S1. In case of Yes, the procedure proceeds to step S2. Whether the sub-engine is operating in the X domain is decided. In case of Yes, the procedure returns to the beginning, and the open-type compressor 9 is driven by the sub-engine 2. Cooling operation is continued. In case of No, the procedure proceeds to step S3, and whether the sub-engine is operating in the Y domain is decided. In case of Yes, the open-type compressor 9 is, as mentioned above, driven by the sub-engine 2 as it is, and the cooling operation is continued.

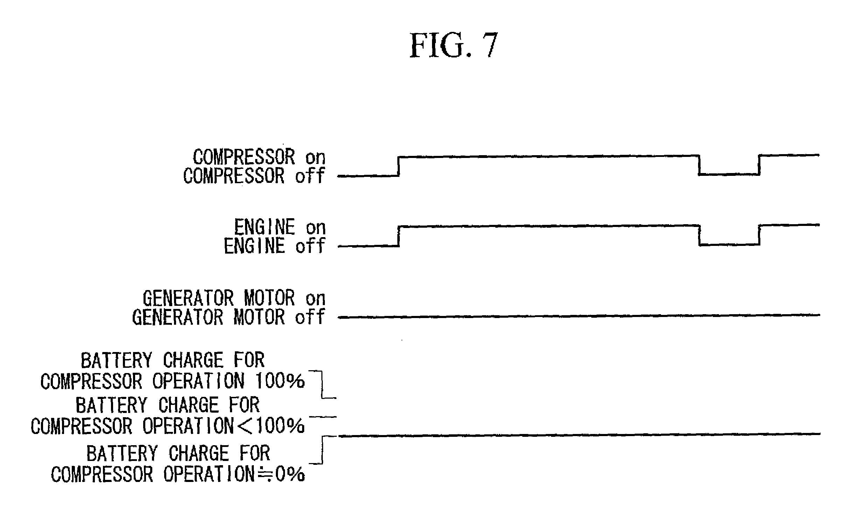

When sub-engine is operating in a high load domain including the X domain and Y domain, the drive time for the open-type compressor 9 gets relatively long as indicated in the time chart of Fig. 7, and the operating time of the sub-engine 2 also gets long. Moreover, over the high load domain, the sub-engine 2 is turned on/off-operated in tandem with the open-type compressor 9. Even when the sub-engine 2 is operated, the generator-motor 5 is left off (idling), and charging of the battery 14 is not carried out.

At the step S3, assuming that a load is small, if the decision is No, the procedure proceeds to step S4, and electric-generation operation is initiated. The electric-generation operation is initiated when the switch 19A (see Fig. 1) is turned on, after which the generator-motor 5 functions as a generator by being driven by the sub-engine 2 and feeds generated electricity to the battery 14. When the electric-generation operation is initiated, the electric-generation time (the battery charging time) is counted at step S5, and whether the time is equal to or longer than, for example, one hour is decided. When the electric-generation time becomes equal to or longer than one hour, the battery 14 is fully charged. A decision is then made that the charge has reached the set value (full charge), and the answer is made Yes. Consequently, the procedure proceeds to step S6, the switch 19A is turned off, and the electric generation by the generator-motor 5 is suspended. Moreover, since the charge of the battery 14 has reached the set value (full charge), the drive source of the open-type compressor 9 is changed from the sub-engine 2 to the generator-motor 5.

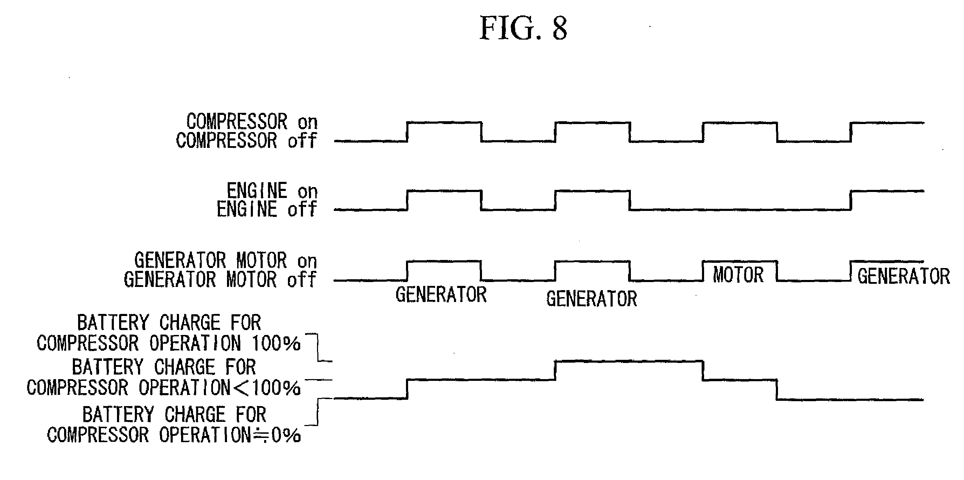

When the operation is in a low load domain falling outside the X domain and Y domain, the on/off cycle of the open-type compressor 9 gets shorter as indicated by the time chart of Fig. 8. At the same time, the operating time of the sub-engine 2 gets shorter. The start and stop of the sub-engine 2 are frequently repeated. Over the low load domain, when the sub-engine 2 is in operation, electric generation is performed by driving the generator-motor 5 as a generator along with driving the open-type compressor 9. Thus, the load factor of the sub-engine 2 is raised in order to improve engine efficiency. After the charging of the battery 14 is completed (full charge), the drive source of the open-type compressor 9 is changed from the sub-engine 2 to the generator-motor 5. Consequently, the start/stop frequency of the sub-engine 2 can be decreased. This is indicated in the time chart of Fig. 8 in such a manner that: in the second "on" period from the left, the generator-motor 5 is driven as a generator in order to charge the battery 14; and at the third "on" period, the generator-motor 5 is operated as a motor in order to drive the open-type compressor 9. While the generator-motor 5 is driven as a motor, the sub-engine 2 is kept off in order to decrease starts and stops.

Moreover, after drive is changed to motor drive by the generator-motor 5 at step S6, the procedure proceeds to step S7, and whether the operation is the X domain is decided. In case of Yes, the procedure proceeds to step S8. A decision is then made on whether the motor operation time by the generator-motor 5 is equal to or shorter than, for example, ten min. In case of No, the procedure returns to step S7. When the motor operation continues for ten min. in this state and if the decision of step S7 is Yes, the decision is made that the amount of electricity discharges by the battery 14 has reached the set value. The procedure then proceeds to step 12, and drive by the generator-motor 5 is changed to drive by the sub-engine 2 again.

If the decision is No at step S7, the procedure proceeds to step S9, and whether the operational domain is the Y domain is decided. In case of Yes, the procedure proceeds to step S10, and whether the time that the generator-motor 5 has been operated is equal to or shorter than, for example, twenty min is decided. In case of No, the procedure returns to step S9. When the motor has been operated for twenty min in this state and the decision becomes Yes, a decision is made that the magnitude of discharge of the battery 14 has reached the set value. The procedure proceeds to step 12, and drive by the generator-motor 5 is changed to drive by the sub-engine 2 again.

If the decision is No at step S9, the procedure proceeds to step 511, and whether the time that the generator-motor 5 has been operated is equal to or shorter than, for example, forty min is decided. In case of No, the procedure returns to step S11. When the motor operation time passes forty min in this state and the decision becomes Yes, a decision is made that the magnitude of discharge of the battery 14 has reached the set value, and the procedure proceeds to step 12. Drive by the generator-motor 5 is changed to drive by the sub-engine 2 again. Thus, during drive by the generator-motor 5, since the consumption of the battery varies depending on whether the refrigeration load is large or small, the motor operation time is changed based on the load so that the depth of discharge (amount of discharge) of the battery 14 is not equal to or smaller than the set value. This prevents a decrease in the service life of the battery 14 which would happen if the depth of discharge of the battery 14 is too deep.

As mentioned above, according to the present embodiment, over a refrigeration high load domain, electric generation by the generator-motor 5 is suspended and the open-type compressor 9 is driven. Consequently, the sub-engine 2 can be operated with a high load. Over a refrigeration low load domain, at the same time that the open-type compressor 9 is driven by the sub-engine 2, the battery 14 is charged through electric generation by the generator-motor 5. Consequently, the sub-engine 2 can be operated with a high load. After the charging of the battery 14 is completed, the sub-engine 2 is kept stopped until the amount of discharge of the battery 14 reaches the set value. The open-type compressor 9 can be driven by the generator-motor 5 operating as a motor with electricity fed from the battery 14. Consequently, the sub-engine 2 can be highly efficiently operated with a high load under all conditions, and the start/stop frequency of the sub-engine 2 can be decreased to the greatest possible extent, so that the problems inherent to the sub-engine-type transport refrigeration apparatus 1 can be overcome.

Moreover, the refrigeration load is calculated, and the generator-motor 5 is used to perform electric generation to such an extent that the output of the sub-engine 2 which drives the open-type compressor 9 does not exceed the maximum output. Consequently, the sub-engine 2 can be stably and very efficiently operated at close to the maximum load. Thus, fuel consumption can be greatly improved. Further, since the remaining amount of charge (depth of discharge) in the battery 14 will not be equal to or smaller than the set value, decrease in the service life of the battery 14 due to the depth of discharge of the battery being too deep can be prevented.

The present invention is not limited to the inventions relevant to the aforesaid embodiments, but can be appropriately modified to the extent that it does not depart from the gist of the invention. For example, the sub-engine 2 and generator-motor 5 may be coupled to each other via a pulley and a belt. Moreover, the magnitude of charge of the battery 14 and the magnitude of discharge thereof are sensed at particular times, but the present invention is not limited to this mode. The amount of stored electricity may be directly sensed.

## Claims

1. A sub-engine-type transport refrigeration apparatus including an open-type compressor that is driven with power obtained from an external driving source, and a dedicated sub-engine that drives the open-type compressor, comprising:
a generator-motor that is connected to the sub-engine via a power connection/disconnection means, so that when the sub-engine is in operation, the generator-motor can generate electricity while being driven by the sub-engine, and that when the sub-engine is stopped, can be operated as a motor by being fed with electricity;
a battery that stores electricity which the generator-motor generates, and that serves as an electricity supply source when the generator-motor is driven as a motor;
an electricity conversion device that is connected to both the generator- motor and the battery, so that when the generator-motor is driven as a generator, the electricity conversion device converts generated AC electricity into DC electricity and feeds the DC electricity to the battery, and when the generator-motor is operated as a motor, the electricity conversion device converts DC electricity fed from the battery into AC electricity and feeds the AC electricity to the generator-motor; and
an open-type compressor that is connected to the generator-motor via a power connection/disconnection means, so that when the sub-engine is in operation, the open-type compressor is driven with power from the sub-engine, and that when the sub-engine is stopped, the open-type compressor is driven with power obtained from the generator- motor that is operated as a motor with electricity from the battery.

2. The transport refrigeration apparatus according to Claim 1, wherein:
when the open-type compressor is stopped due to a decrease in the refrigeration load, the sub-engine continues to be operated until the amount of charge in the battery reaches a set value; and
after the battery is charged up to the set value, the sub-engine is kept stopped until the amount of electricity discharged by the battery reaches a set value, during which time the open-type compressor is driven by the generator-motor that is operated as a motor with electricity fed from the battery.

3. The transport refrigeration apparatus according to Claim 1, wherein:
taking advantage of the characteristic of the sub-engine that it becomes highly efficient when operating at nearly the maximum load, over a set refrigeration high load domain, electric generation by the generator-motor is suspended and the open-type compressor is driven by the sub-engine;
over a refrigeration low load domain, at the same time that the open-type compressor is driven by the sub-engine, the battery is charged with electricity generated by the generator-motor; and
after the battery is charged up to the set value, the sub-engine is kept stopped until the amount of electricity discharged reaches the set value, during which time the open-type compressor is driven by the generator-motor that is operated as a motor with electricity fed from the battery.

4. The transport refrigeration apparatus according to Claim 3, wherein the refrigeration load is calculated from the ambient temperature and the cooling chamber interior temperature, and the generator-motor is driven as a generator to such an extent that the sub-engine does not exceed its maximum output.
